(19) Europäisches Patentamt
European Patent Office
Office européen des brevets

(11) **EP 1 913 665 B1**

(12) **FASCICULE DE BREVET EUROPEEN**

(45) Date de publication et mention
de la délivrance du brevet:
**04.02.2009 Bulletin 2009/06**

(21) Numéro de dépôt: **06778207.8**

(22) Date de dépôt: **10.08.2006**

(51) Int Cl.:
*H01S 3/10* (2006.01)          *H01S 3/23* (2006.01)

(86) Numéro de dépôt international:
**PCT/EP2006/065203**

(87) Numéro de publication internationale:
**WO 2007/020224 (22.02.2007 Gazette 2007/08)**

(54) **SOURCE LASER A RECOMBINAISON COHERENTE DE FAISCEAUX**

LASERQUELLE MIT KOHÄRENTER STRAHLREKOMBINATION

LASER SOURCE WITH COHERENT BEAM RECOMBINATION

(84) Etats contractants désignés:
**DE FR GB**

(30) Priorité: **12.08.2005 FR 0508542**

(43) Date de publication de la demande:
**23.04.2008 Bulletin 2008/17**

(73) Titulaire: **THALES**
**92200 Neuilly sur Seine (FR)**

(72) Inventeurs:
- **DEMOUSTIER, Sébastien**
  **F-75014 Paris (FR)**
- **BRIGNON, Arnaud**
  **F-92340 Bourg-La-Reine (FR)**
- **HUIGNARD, Jean-Pierre**
  **F-75013 Paris (FR)**
- **MUGNIER, Laurent**
  **F-92190 Meudon (FR)**
- **PRIMOT, Jérôme**
  **F-92320 Chatillon (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A- 5 384 455          US-A1- 2003 206 350**
**US-A1- 2004 056 174**

- **KENDRICK R L ET AL: "PHASE-DIVERSITY WAVE-FRONT SENSOR FOR IMAGING SYSTEMS" APPLIED OPTICS, OSA, OPTICAL SOCIETY OF AMERICA, WASHINGTON, DC, US, vol. 33, no. 27, 20 septembre 1994 (1994-09-20), pages 6533-6546, XP000469298 ISSN: 0003-6935**
- **R.G. PAXMAN, S.L. CRIPPEN: "Aberratio correction for phased-aray telescopes using phase-diversity" SPIE, vol. 1351, 1990, pages 787-797, XP002366377**

**Description**

La présente invention concerne une source laser à recombinaison cohérente de faisceaux, en particulier une source laser de puissance.

La recombinaison cohérente de faisceaux lasers est une technique utilisée pour répondre au problème de limitation de la tenue au flux des matériaux à gain, dans le but d'obtenir une source laser de puissance. En particulier, on réalise ainsi des sources lasers de puissance fibrées. Cette technique permet d'obtenir un faisceau laser de grande luminance, mais aussi de grande cohérence, et de grande qualité optique (limité par diffraction). Les sources laser à recombinaison cohérente de faisceaux permettent ainsi d'envisager des puissances qu'il ne serait pas possible d'obtenir d'une unique fibre, du fait de la limitation de la tenue au flux. A titre d'exemple, une fibre laser dopée Ytterbium à maintien de polarisation permet d'extraire 500 W continu monomode. Une source laser qui comprendrait un bouquet d'une centaine de ces fibres, avec un système de recombinaison cohérente, permettrait d'extraire 50 kW monomode, puissance qu'il n'est pas possible d'obtenir d'une fibre unique. On comprend ainsi tout l'intérêt de la recombinaison cohérente de faisceaux.

Le principe général de cette technique de recombinaison cohérente de N faisceaux lasers élémentaires, est de répartir l'amplification nécessaire sur N milieux à gain, à propagation monomode spatiale. En sortie des N milieux à gain, on effectue la sommation de N faisceaux cohérents. N est choisi aussi grand que nécessaire en fonction de l'application visée. Les faisceaux à recombiner peuvent en pratique se présenter selon un réseau à une dimension (1 D) ou deux dimensions (2D), selon une matrice PxQ. Dans la suite, on se place dans le cas d'un réseau 1 D, mais tout ce qui est décrit peut s'appliquer aussi bien à un réseau 2D.

La recombinaison cohérente consiste ainsi à sommer N faisceaux cohérents de même polarisation en parallèle, chacun amplifié par propagation dans un milieu à gain. Dans le cas où l'on assure la mise en phase, les N faisceaux laser qui émergent des N milieux à gain, interfèrent constructivement et constituent ainsi une source de luminance $N^2$ fois supérieure à celle d'un amplificateur élémentaire (i.e. 1 faisceau, 1 milieu à gain), tout en gardant sa qualité de faisceau (limité par diffraction dans le cas de fibres monomodes par exemple).

Cependant les N faisceaux suivent des chemins de propagations différents, et subissent ainsi des variations de phase différentes. Ces variations de phase sont dues à des variations d'indice d'origines multiples : conditions environnementales (température, vibrations contraintes mécaniques, etc), traversées de milieux à gain pompés, etc. Ces différentes perturbations de phase varient avec le temps.

Ainsi, ces sources lasers nécessitent un dispositif de contrôle dynamique de la phase de chaque faisceau, qui permet de corriger et d'annuler en temps réel les différences de phase entre les différents faisceaux. On assure ainsi une grande stabilité du faisceau laser issu de la recombinaison, dans des conditions environnementales sévères. En outre, un tel dispositif facilite la prise en compte d'un éventuel élément manquant.

Le contrôle dynamique de la phase de chaque faisceau a d'autres avantages connus, tel que celui de permettre de réaliser une fonction de balayage de faisceau. Ceci est particulièrement intéressant dans les applications optroniques telles que par exemple la désignation, le pistage ou le pointage, ou les communications en espace libre.

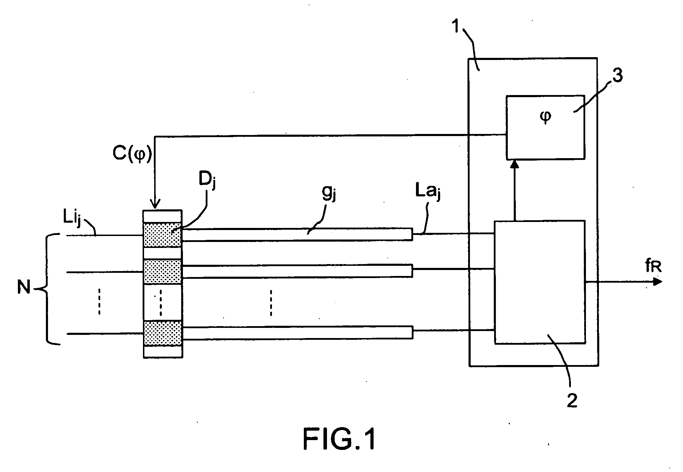

Un schéma de principe d'une source laser à recombinaison cohérente de faisceaux selon l'état de l'art est illustré sur la figure 1.

Cette source comprend N faisceaux lasers incidents $Li_j$, avec j=1 à N, N déphaseurs $D_j$, un par faisceau laser incident, N voies $g_j$ de propagation monomode spatiale, un par faisceau laser incident. Dans le cas d'une source laser de puissance, ces voies de propagation sont de préférence des milieux à gain, avantageusement des fibres amplificatrices. Les N faisceaux lasers incidents sont des faisceaux monomodes spatiaux de même polarisation.

Un système 1 de recombinaison cohérente, reçoit un faisceau composé des N sous-faisceaux lasers $La_j$, obtenus en sortie des N voies $g_j$. Il fournit un faisceau laser recombiné $f_R$ en sortie.

Le système de recombinaison cohérente comprend un dispositif 2 permettant de prélever une partie du faisceau de sortie vers un dispositif 3 d'asservissement de phase. Ce dispositif d'asservissement fournit le signal de contre-réaction vers chacun des déphaseurs $D_j$. Le dispositif 2 peut par exemple, comprendre un réseau de micro lentilles, dans un exemple de recombinaison cohérente des faisceaux en espace libre.

Le dispositif 3 d'asservissement de phase élabore des signaux de contre-réaction suivant un algorithme d'asservissement approprié appliqué à l'infime portion de faisceau prélevée par le dispositif 2. Le dispositif 3 mesure sur cette infime portion de faisceau prélevée, les différences de phase entre les sous-faisceaux $La_j$. Il élabore les signaux de contre-réaction à appliquer aux déphaseurs $D_j$ à partir de ces mesures. Chacun des N déphaseurs $D_j$ est ainsi asservi en boucle fermée, par un signal de contre-réaction correspondant élaboré par le dispositif d'asservissement 3. Ce signal traduit l'efficacité du système 1 de recombinaison cohérente dans la mise en phase des N faisceaux $La_j$ en sortie des voies $g_j$.

Dans l'invention, on s'intéresse plus particulièrement au dispositif 3 d'asservissement de phase. Ce dispositif d'asservissement de phase doit répondre à différentes contraintes, qui conditionnent l'efficacité de la mise en phase par le système 1 de recombinaison cohérente.

Une première contrainte est la cadence de correction de phase. En effet, les milieux à gain, qui sont de préférence des milieux à gain fibrés (ie, fibres lasers) sont généralement très longs, et très sensibles aux perturbations environnementales. Ceci impose une cadence de correction de phase élevée, typiquement de l'ordre de plusieurs kHz.

Une deuxième contrainte réside dans la mesure à effectuer pour corriger la phase. Il ne s'agit pas de mesurer les aberrations d'un seul faisceau, comme dans d'autres applications d'imagerie. En effet, le système de recombinaison cohérente 1 reçoit N faisceaux. Et il s'agit de mesurer les déphasages entre chacun de ces N faisceaux, pour les recombiner de manière efficace. Mais il ne s'agit pas non plus d'analyser toutes les aberrations : les N faisceaux étant tous monomodes, chacun est ainsi quasiment limité par diffraction et sans aberration. Les déphasages à mesurer et à corriger correspondent ainsi à des aberrations de l'ordre 0, c'est à dire des pistons de phase, et éventuellement à des aberrations de l'ordre 1, c'est à dire des basculements ou *"tilts"*.

On peut dire que chacun des faisceaux reçus, est vu par le système de recombinaison cohérente comme une sous-pupille. Et chacune des N sous-pupilles vues par le système de recombinaison cohérente est déphasée par rapport aux autres sous-pupilles d'un déphasage constant, i.e. d'un piston, c'est à dire une aberration de l'ordre 0 ou d'un basculement des surfaces d'onde de chacune des pupilles, c'est à dire une aberration du 1$^{er}$ ordre.

Un dispositif d'asservissement de la phase d'un système de recombinaison de faisceaux doit permettre de mesurer et corriger ces aberrations, à la cadence nécessaire, pour une bonne efficacité.

On connaît différents systèmes qui permettent de mesurer et corriger la phase.

Dans un système basé sur une méthode d'analyse dite interférométrique, le décalage de phase est mesuré entre la sous-pupille de chaque faisceau et une référence. Cette référence peut être fournie par l'un des N faisceaux ou plus simplement par un faisceau supplémentaire de référence, modulé en phase. Ce faisceau de référence joue le rôle d'un oscillateur local. Dans le cas où les milieux de propagation sont des milieux à gains fibrés, le faisceau de référence peut être amené en entrée du système de recombinaison cohérente par une fibre non-amplificatrice.

Selon cette méthode d'analyse, le dispositif 3 d'asservissement de la phase remonte à l'écart de phase de chaque sous-pupille par rapport à la référence en démodulant les signaux détectés en quadrature de phase.

Cette méthode d'analyse a le défaut d'être complexe à mettre en oeuvre pour un grand nombre N de faisceaux, puisque, grossièrement, elle consiste à réaliser un interféromètre pour chaque sous-pupille. Elle nécessite donc de prévoir un système de détection pour chaque voie $g_j$, avec les problèmes d'alignement que cela implique, en plus de la gestion d'un faisceau supplémentaire de référence. En pratique, cette méthode peut être mise en oeuvre pour un petit nombre de faisceaux, typiquement jusqu'à N=4 par exemple. Dans un système où l'on peut avoir une centaine de faisceaux, la mise en oeuvre de cette méthode devient très fastidieuse.

On connaît une autre méthode qui utilise les déphaseurs $D_j$ (dont la bande passante doit être adaptée en conséquence) pour imprimer à chacun des N faisceaux, en plus de la correction de phase, une modulation de phase RF (plusieurs dizaines ou centaines de MHz), i.e. une modulation beaucoup plus rapide que la fréquence des corrections de phase (typiquement inférieure à quelques dizaines de kHz). Cette modulation doit être différente pour chaque faisceau. Chaque sous-pupille détectée est ainsi discriminée des autres par une fréquence RF différente. La détection utilise un détecteur unique, typiquement une photodiode. Le traitement de signal associé permet de remonter à l'écart de phase de chacune des sous-pupilles détectées en analysant le décalage de phase propre à chaque fréquence RF. Cette méthode qui ne nécessite qu'un seul détecteur a comme avantage d'être plus simple à mettre en oeuvre que la méthode d'analyse interférométrique. De plus elle ne nécessite pas de faisceau de référence. En contrepartie, elle nécessite une électronique de traitement plus complexe, notamment une électronique apte à générer N fréquences RF différentes. Mais ce n'est pas là son principal défaut. En effet, avec cette méthode, pour des applications de la source laser de puissance de type transmission de données dans des systèmes de communications en espace libre, chacun des N faisceaux est modulé à une fréquence RF, fréquence qui pourrait se trouver dans la bande passante des signaux à transmettre. Ceci est un inconvénient qui limite les possibilités d'applications de cette méthode.

On connaît par ailleurs des analyseurs de front d'onde, notamment les interféromètres à décalage de phase, les interféromètres à ondes multiples, ou les analyseurs de front d'onde du type Shack-Hartmann. Cependant ces analyseurs sont peu adaptés pour la mesure de déphasage dans un système de recombinaison cohérente de faisceaux. Ils sont en effet très complexes et difficiles à mettre en oeuvre. Mais surtout, leur cadence de correction est faible, généralement inférieure au kHz, ce qui ne permet pas d'assurer une correction en temps réel à la cadence recherchée. En outre, un analyseur de front d'onde du type Shack-Hartmann ne permet pas de mesurer des aberrations de l'ordre 0 (pistons de phase).

Dans l'invention, on a cherché un dispositif d'analyse de la phase qui n'a pas les différents inconvénients des dispositifs et méthodes de l'état de l'art, et qui réponde aux performances recherchées tant sur le plan de la capacité à mesurer des aberrations de l'ordre 0 et de l'ordre 1, de la simplicité de la mise en oeuvre et de la cadence de correction.

Une idée à la base de l'invention est de ne pas traiter les N faisceaux séparément, mais de considérer la sortie des N voies $g_j$ comme un objet, dont on prend une image dont on veut corriger les aberrations.

Selon l'invention, on applique à cette image une méthode de traitement dite de la diversité de phase, pour en corriger au moins les aberrations de l'ordre 0 (pistons).

La diversité de phase est une méthode de traitement connue utilisée en imagerie, et notamment en astronomie, notamment pour corriger les images reçues sur un télescope. Plus particulièrement la diversité de phase est utilisée dans ce domaine pour la correction d'une surface d'onde ou front d'onde perturbé par la propagation dans l'atmosphère où par les désalignements du système d'imagerie (télescope). Elle est aussi utilisée dans les capteurs dits de cophasage pour réaliser des télescopes de grand diamètre par synthèse d'ouverture optique, en recombinant interférométriquement plusieurs sous-pupilles de diamètres inférieurs qui peuvent être des segments de miroirs primaires ou des télescopes distincts. Par exemple, le document US 2004/056174 (Specht et al.) décrit le cophasage de plusieurs télescopes utilisant cette méthode de diversité de phase.

De façon simplifiée la méthode dite de diversité de phase, telle qu'habituellement utilisée pour améliorer la résolution d'un système d'imagerie tel qu'un télescope, consiste à analyser une image focale et une image défocalisée, reliée par une relation non linéaire connue. Elle a l'avantage d'être simple à mettre en oeuvre sur le plan du montage. Elle nécessite en contrepartie des moyens de traitement d'image adaptés.

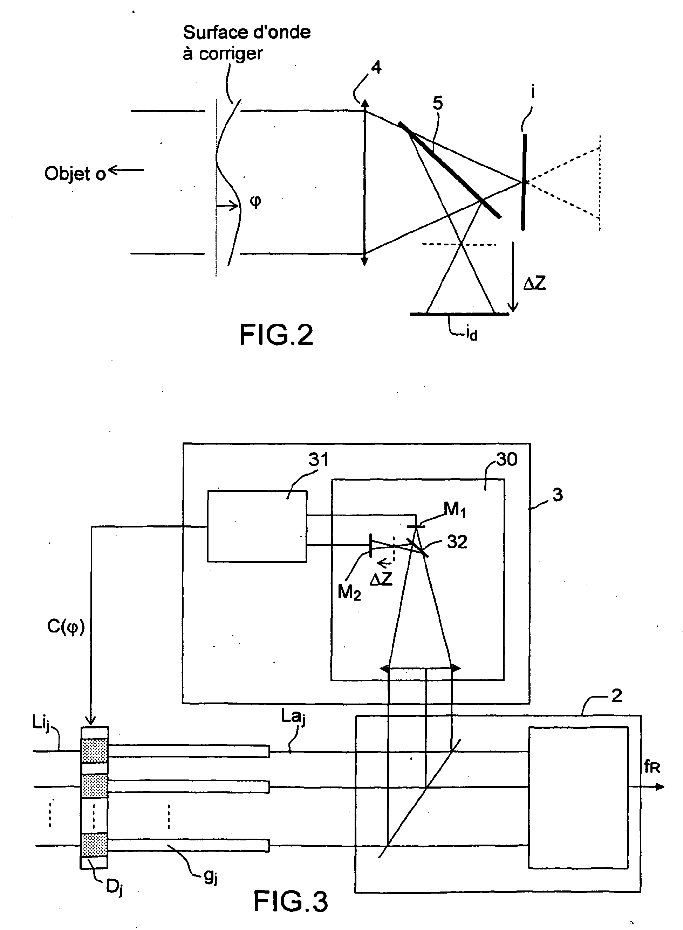

Elle peut être décrite comme suit, en relation avec la figure 2 :

Soit un objet o, dont on cherche à faire une image i. Le télescope permet d'acquérir l'image i de l'objet o dans le plan focal du télescope 4. A partir de cette image détectée i, on remonte à l'objet o et à sa phase aberrante. Pour cela, on acquiert une deuxième image i' de l'objet o, défocalisée. Cette deuxième image est réalisée au moyen d'un élément de déformation 5, qui ajoute une déformation connue à la surface d'onde. On obtient ainsi une information supplémentaire sur la phase grâce à l'acquisition de la première image i et de la deuxième image i'. Les deux images i et i' obtenues sont reliées par une relation caractéristique de la déformation induite par l'élément de déformation 5. Un traitement du signal adapté permet alors de remonter conjointement à la phase aberrante et à l'objet o. La deuxième image i' a donc apporté une "diversité" à la mesure de phase, d'où le nom de cette méthode. Typiquement, la diversité peut-être apportée simplement par une défocalisation du plan image d'une longueur $\Delta Z$ connue, par exemple au moyen d'une lame de verre comme illustré sur la figure 2. En pratique, on peut utiliser plusieurs images pour mesurer les aberrations optiques.

Selon l'invention, on utilise un dispositif d'asservissement de la phase du type à diversité de phase dans un système de recombinaison cohérente de faisceaux, pour analyser des écarts de phase entre les faisceaux, et commander les déphaseurs de manière adaptée, en sorte d'obtenir en sortie un faisceau recombiné de façon optimale.

On se place ainsi dans une démarche très différente par rapport à l'état de l'art, en réalisant une analyse de la phase de manière collective, c'est à dire en ne considérant pas le faisceau incident comme une juxtaposition de N faisceaux, mais bien comme un unique faisceau dont on chercherait à faire l'image. Si tous les N faisceaux sont en phase, l'image observée sera quasiment celle d'un unique lobe principal. Moins les écarts de phase seront contrôlés, plus ce lobe s'amoindrira et plus l'image sera chaotique.

L'invention permet de traiter des sources lasers de puissance à grand nombre de faisceaux disposés selon un réseau 1 D ou 2D. A titre d'exemple elle permet de traiter facilement une source comprenant un réseau 2D de faisceaux, 10x10 faisceaux par exemple.

L'invention est définie dans la revendication 1. Elle concerne donc une source laser à recombinaison cohérente de faisceaux, comprenant N faisceaux lasers monomodes spatiaux cohérents et N déphaseurs, un par faisceau, commandés par un dispositif d'asservissement de phase, caractérisée en ce que ledit dispositif d'asservissement comprend :

-	un dispositif optique comprenant des moyens pour prélever une portion au moins de chacun desdits N faisceaux, ledit dispositif optique comprenant un élément optique d'application d'une déformation de phase, et au moins une matrice de détecteurs pour détecter une première image d'une surface d'onde correspondant auxdits N faisceaux, et une deuxième image déformée par ledit élément optique, et

-	des moyens de traitement desdites première et deuxième images, lesdits moyens de traitement comprenant des moyens de mesure des pistons de phase entre les sous-pupilles correspondants auxdits N faisceaux, et d'application des corrections de phase à chacun des N faisceaux, au moyen desdits N déphaseurs en sorte de minimiser lesdits pistons de phase,

pour fournir en sortie un faisceau laser recombiné optimisé.

Les moyens de traitement peuvent en outre mesurer des basculements de phase et déterminer des corrections de phase correspondantes.

L'élément optique de déformation est de préférence un élément de défocalisation d'une distance connue.

De préférence les N faisceaux lasers sont amplifiés par des milieux à gain, de manière à obtenir en sortie un faisceau laser de puissance et de préférence, être des fibres amplificatrices.

Dans une variante, ledit dispositif optique applique en outre une mise en forme du faisceau recombiné en sortie, en imprimant un profil de surface d'onde approximé par des pistons de phase juxtaposés auxdites corrections de phase.

Ledit profil approximé peut être une rampe de phase, une fonction de phase de pré-correction de perturbations ultérieures, ou plus généralement une fonction de mise en forme fonction de l'utilisation du faisceau.

D'autres avantages et caractéristiques de l'invention apparaîtront plus clairement à la lecture de la description qui suit, faite à titre indicatif et non limitatif de l'invention et en référence aux dessins annexés, dans lesquels :

- la figure 1 déjà décrite, est un schéma bloc d'une source laser à recombinaison cohérente de faisceaux selon l'état de l'art ;
- la figure 2 déjà décrite, est une illustration d'un système d'imagerie d'un télescope mettant en oeuvre la méthode dite de diversité de phase pour améliorer la qualité de l'image détectée ;
- la figure 3 illustre une source laser à recombinaison cohérente de faisceaux mettant en oeuvre une telle méthode de diversité de phase pour réaliser l'asservissement de phase ;
- les figures 4a à 4c illustrent un système optique permettant l'analyse de la transmittance d'une pupille pour analyser l'écart de phase entre les sous-pupilles correspondant aux différents sous-faisceaux formant l'image ;
- la figure 5 illustre le diagramme de rayonnement et la surface d'onde correspondante obtenue avec une source laser selon l'invention ;
- la figure 6 illustre le diagramme de rayonnement et la surface d'onde correspondante obtenue avec une source laser selon l'invention, dans le cas d'une implémentation d'une fonction de balayage de faisceau ;
- la figure 7 illustre un autre diagramme de rayonnement et la surface d'onde correspondante que l'on peut obtenir avec une source laser selon l'invention, dans le cas d'une implémentation d'une pré-correction de perturbations ultérieures du faisceau recombiné ;
- la figure 8 illustre le diagramme de rayonnement et la surface d'onde correspondante obtenue avec une source laser selon l'invention, dans le cas d'une implémentation d'une fonction de mise en forme de faisceau, dans le cas d'un réseau 2D de faisceaux lasers.

Dans l'invention, on applique la méthode de diversité de phase à la recombinaison cohérente de N faisceaux, dans une source laser, comme illustré sur la figure 3. Dans ce contexte, l'éclairement est cohérent.

Le dispositif 3 d'asservissement de la phase comprend alors une première matrice $M_1$ et une deuxième matrice $M_2$ de détecteurs rapides, la première pour détecter l'image i de la surface d'onde émise en sortie des N voies $g_j$ de propagation monomode ; la deuxième pour détecter l'image déformée id par un élément optique 32 appliquant une déformation de phase. Le dispositif 3 d'asservissement de la phase comprend en outre un dispositif 31 de traitement de signal, apte à mettre en oeuvre des calculs de type transformée de Fourier, autocorrélation,....etc, pour déterminer la phase aberrante de l'image i et en déduire les corrections de phase à apporter en entrée de chacune des voies $g_j$, sur les N déphaseurs $D_j$.

On notera qu'il est tout à fait possible, et connu, d'assurer la détection des deux images i et id par une unique matrice de détecteurs. Cette mise en oeuvre est réalisée par l'homme du métier sans difficultés particulières.

Un tel dispositif d'asservissement de la phase selon l'invention est simple de mise en oeuvre, car il ne nécessite qu'une ou deux matrices de détecteur. Il n'y a pas de faisceau de référence à prévoir, ni de modulation du signal utile.

Dans un exemple simple de réalisation, l'élément optique déformant 32 est un élément défocalisant d'une distance connue $\Delta Z$, typiquement une lame d'épaisseur $\Delta Z$. On a alors une déformation non linéaire de la phase. Dans cet exemple cette déformation est connue, ce qui simplifie le traitement des données, mais il est tout à fait possible d'utiliser un élément de déformation de phase, qui applique une déformation quelconque. La seule limitation vient du nombre de paramètres nécessaires à modéliser la déformation, qui rend le traitement de données pour remonter à ces paramètres plus ou moins complexes.

Dans la suite, on se place dans le cas simple d'un élément optique 32, qui est un élément défocalisant d'une distance connue.

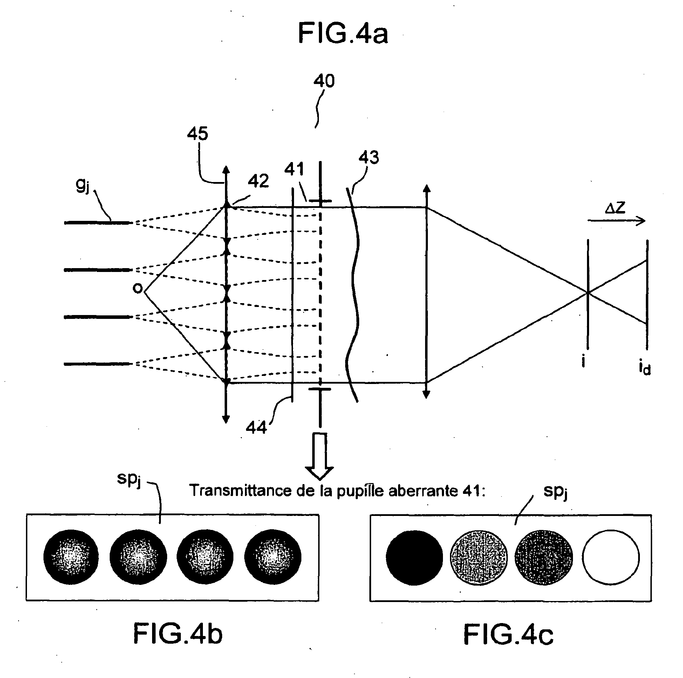

La figure 4, illustre de façon schématique le principe d'analyse de la phase selon l'invention, à rapprocher de la figure 2. A la place d'un objet o lointain (figure 2) source d'éclairement, on a ici N faisceaux monomodes spatiaux cohérents émis en sortie de N voies $g_j$, qui arrivent sur un dispositif 40. Un réseau de N microlentilles 42 de collimation, un par faisceau, est prévu en entrée. Au niveau de la pupille 41, on obtient N faisceaux lasers monomodes collimatés. Ces N faisceaux ont un profil sphérico-gaussien.

Pour les besoins de la modélisation, et pour faire le parallèle avec le dispositif de la figure 2 utilisée en astronomie, l'onde aberrante 43 peut-être modélisée par une onde plane parfaite 44 traversant une pupille aberrante 41 qui a pour transmittance, les distributions de phase et d'amplitude des n faisceaux monomodes dans le plan du waist. On rappelle que le waist d'un faisceau ("col" en français) est l'endroit où la phase du faisceau est plane et où le faisceau est le plus petit.

Il s'agit ainsi d'analyser la pupille équivalente à la surface d'onde 43 émise par un réseau de N faisceaux laser en sortie des N voies $g_j$.

On rappelle qu'un faisceau laser a une distribution de champ sphérico-gaussienne. Ainsi, la transmittance de la pupille virtuelle 41 placée au waist des N faisceaux, c'est à dire au col, est la juxtaposition de N sous-pupilles $sp_j$ ayant une distribution d'amplitude gaussienne (illustrée sur la figure 4b) et une distribution de phase (illustrée sur la figure 4c) qui sont constantes sur chacune des sous-pupilles $sp_j$, mais décalées entre elles du déphasage que l'on cherche à corriger.

En se plaçant dans l'hypothèse où les faisceaux sont parfaitement parallèles à l'axe de propagation, les basculements (tilts) des sous-pupilles sont nuls.

Pour la modélisation, le système est donc équivalent à celui d'un objet o connu ponctuel, et d'une lentille collimatrice 45, émettant une onde plane 44, perturbée par la traversée d'une pupille aberrante 41, ayant les caractéristiques énoncées plus haut.

On fait les hypothèses suivantes :

- un éclairement spatialement cohérent et monochromatique ;
- un dispositif 40 qui est un système linéaire et invariant par translation.

Le champ image i dans le plan focal du dispositif optique 40 est relié à l'objet o par l'équation :

$$i(x) = o(x) * h(x)$$

où * est l'opérateur convolution, i et o les champs image et objet et h la réponse percussionnelle du dispositif optique 40 (propagation, instrument optique et capteur), et en négligeant ici les termes de bruit qui viennent entacher l'image (i = o * h + b).

L'image en intensité Im vue par un détecteur matriciel $M_1$, typiquement un CCD, placé au foyer du système d'analyse est alors $Im = |i|^2 = i.i^*$

En se plaçant dans le plan de la pupille, cette relation devient dans l'espace fréquentiel : I = O . H

où I, O et H sont les transformées de Fourier de i, o et h. H est la fonction de transfert du dispositif optique 40.

Comme l'onde incidente est supposée plane avant d'être perturbée par la pupille 41, O(x) est dans notre cas un Dirac.

On a donc O(u)=1 et i(x)=h(x).

De plus, on peut écrire :

$$H(u) = \sum_{n=1}^{N} P(u - u_n) e^{i\varphi_n(u)}$$

où P est l'amplitude de l'onde sphérico-gaussienne de chaque faisceau.

On décompose la phase de chacun des faisceaux sur la base des polynômes de Zernike :

$$\varphi_n(u) = \sum_{i} \alpha_{i,n} Z_i(u - u_n)$$

En prenant comme l'hypothèse que les sous-pupilles ne sont déphasées que d'un piston, il est possible de tronquer la somme précédente au polynôme d'ordre 1, soit : ($\varphi_n(u) = \alpha_n$). On notera que pour tenir compte des basculements, ou " tilts", il faudrait tronquer au polynôme d'ordre 3. Donc, dans le plan focal, on peut écrire :

$$H(u) = \sum_{n} P(u - u_n) e^{i\alpha_n}$$

La diversité de phase est apportée par une défocalisation du plan focal de la quantité $\Delta Z$. Pour désigner les grandeurs correspondantes à l'image défocalisée $im_d$, nous utiliserons les mêmes notations, indexées d'un d, soit :

$$H_d(u) = \sum_{n} P(u - u_n) e^{i(\varphi_n(u) + \varphi_d(u))}$$

avec $\varphi_d$ la diversité de phase apportée par la défocalisation :

$$\varphi_d(u) = \frac{\pi \Delta Z}{\lambda f^2} |u|^2$$

Ainsi, connaissant o et $\varphi_d$, mesurant les intensités Im et $Im_d$ des images observées i et $i_d$, nous pouvons grâce à un traitement du signal approprié remonter aux phases $\varphi_n$ recherchées.

Ce traitement pourra consister par exemple en une optimisation d'un critère J, fonction de N pistons $\alpha_n$.

Par exemple, on pourra utiliser un critère J issu de la méthode des moindres carrés, soit :

$$J(\alpha_1,...,\alpha_n) = \left\| Im - i i^* \right\|^2 + \left\| Im_d - i_d i_d^* \right\|$$

L'optimisation d'un tel critère J consiste alors minimiser l'écart entre les intensités Im et $Im_d$ et les intensités des images reconstruites à partir de l'estimation des pistons $\varphi_n$ dans les expressions de H.

En appliquant le théorème de Parseval, et en utilisant I(u)=H(u), on peut écrire :

$$J = \sum_u \left| TF[Im] - H \otimes H \right|^2 + \sum_u \left| TF[Im_d] - H_d \otimes H_d \right|^2$$

Les N pistons $\alpha_n$ recherchés sont alors ceux qui annulent ce critère J.

L'invention ne se limite pas à ce seul critère. D'autres critères plus sophistiqués et astucieux peuvent être mis en oeuvre sans départir de l'esprit de l'invention.

Dans ce qui précède, on a considéré uniquement des déphasages de l'ordre 0 (pistons de phase). On notera que la prise en compte des basculements ("tilts") nécessite seulement de rajouter deux termes d'ordre 1 dans la décomposition de la phase sur la base des polynômes de Zernike.

Ainsi, un dispositif 3 d'asservissement de la phase selon l'invention tel qu'illustré sur la figure 3, permet, par la seule acquisition de deux images défocalisées, ou plus généralement, reliées par une relation de phase, de remonter simplement aux déphasages que l'on cherche à corriger, et permet la mise en phase, c'est-à-dire l'annulation des pistons de phase relatifs, de chacune des N sous-pupilles des faisceaux en sortie des voies $g_j$, vus collectivement comme une onde plane.

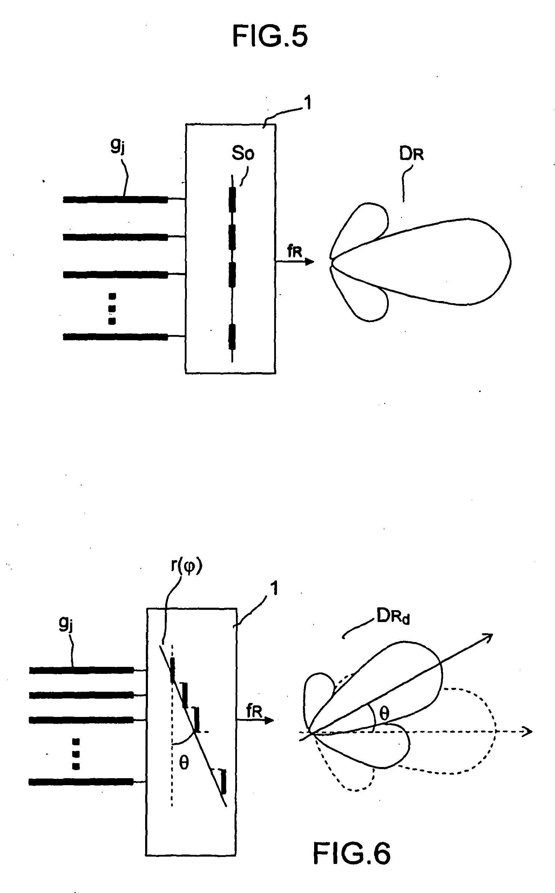

Il permet d'obtenir la recombinaison en champ lointain d'un faisceau $f_R$, dont le diagramme de rayonnement $D_R$ est monomode, comme illustré sur la figure 5, et ce sans limitation de puissance. Sur cette figure, on a illustré de façon schématique la surface d'onde So correspondante, obtenue par annulation des N pistons de phase relatifs $p_j$ par un système de recombinaison cohérente mettant en oeuvre un dispositif d'analyse et de correction de phase selon l'invention.

On a ainsi une mise en forme de faisceau $f_R$ et une génération de surface d'onde optique optimales pour l'application.

Cette fonction de mise en phase illustrée sur la figure 5, qui consiste en l'annulation de tous les pistons, est la fonction la plus élémentaire qu'un dispositif d'analyse et correction de phase selon l'invention peut mettre en oeuvre,

Il est possible de mettre en oeuvre des fonctions de mise en forme plus élaborées pour générer des profils de surface d'onde plus complexes, qui trouvent une utilité dans diverses applications.

Cette mise en forme de faisceau $f_R$ et une génération de surface d'onde optique prend tout son sens lorsque le nombre N de faisceaux (ou de sous-pupilles) considéré est très grand. En effet, on ne contrôle que le piston de chaque sous-faisceau, i.e. un « plateau » de phase, et la surface d'onde globale résultante est donc composée de « marches d'escalier ». Plus celles-ci sont nombreuses, i.e. plus N est grand, plus la surface d'onde émise se rapproche du gabarit désiré.

Dans un exemple de mise en forme plus élaborée, on réalise la déflexion ou le balayage du faisceau $f_R$, qui s'applique notamment à des applications optroniques telles que par exemple la désignation, le pistage ou le pointage, ou les communications en espace libre.

Pour réaliser une telle déflexion de faisceau, en plus d'annuler les pistons de phase relatifs entre les sous-pupilles, on imprime un profil de rampe de phase r, en sorte que chacune des sous-pupilles se retrouve décalée d'un piston de phase $p_j$ constant par rapport à ses voisines. C'est ce qui est illustré sur la figure 6.

Le lobe principal du diagramme de rayonnement $D_R$ est défléchi de l'angle $\theta$ de la rampe de phase. En contrepartie, son amplitude est un peu diminuée.

Comme expliqué plus haut, plus le nombre N de faisceaux est important, meilleure est l'approximation de la rampe par les pistons de phases. On obtient alors une très bonne résolution du dépointage.

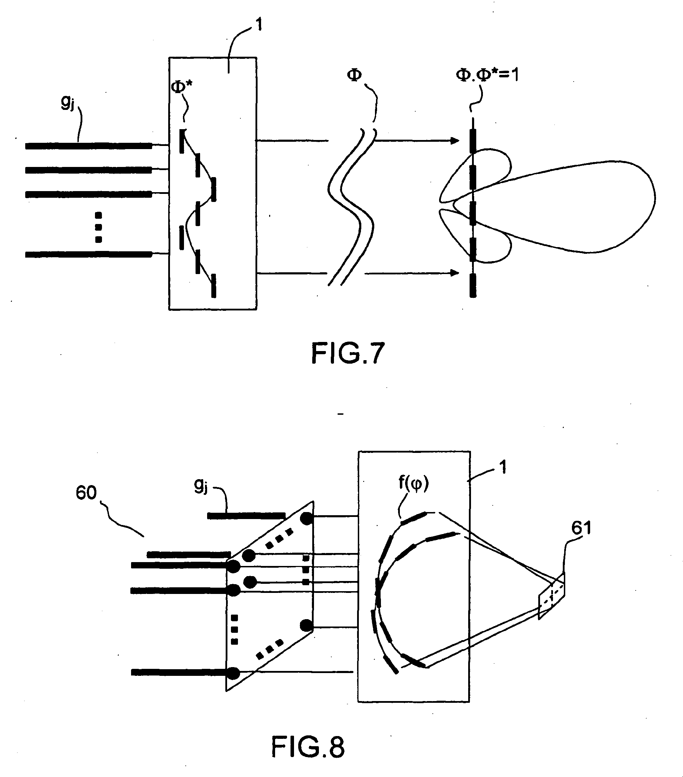

Un autre exemple de mise en oeuvre est illustrée sur la figure 7. En plus de la correction de phase pour annuler les pistons de phase relatifs liés à la transmission des faisceaux dans les voies $g_j$, on imprime une fonction de phase $\Phi^*$ approximée par des pistons de phase $p_j$, de manière à pré-corriger les perturbations atmosphériques $\Phi$ que rencontrera le faisceau $f_R$ recombiné en sortie, lors de sa propagation en espace libre. Dans le plan de surface de réception du faisceau laser recombiné $f_R$, les pistons de phase sont nuls. Ceci concerne typiquement des applications optroniques et de télécommunication.

Selon une variante similaire, on peut imprimer des profils de surfaces d'onde aux allures diverses, pour des applications diverses. Par exemple, partant d'un réseau matriciel 60 à deux dimensions de voies $g_j$, il est possible d'imprimer une fonction de phase $f(\varphi)$ telle que l'on obtienne la focalisation du faisceau en une tache rectangulaire 61, comme illustré sur la figure 8 et ce sans élément optique supplémentaire. Ceci peut s'appliquer notamment à des applications de type rectification de surface par faisceau laser.

Ainsi, en traitant les N faisceaux collectivement comme une seule image, on bénéficie d'une méthode collective qui permet l'analyse de la phase sur un très grand nombre N de faisceaux. A titre d'exemple, les systèmes à diversité de phase utilisés en astronomie permettent de traiter et d'optimiser des images de $512 \times 512$ pixels avec plusieurs paramètres d'ajustement par pixel. Dans l'invention, il n'y a un faible nombre de paramètres d'ajustement, trois au maximum, à savoir le piston, et éventuellement le basculement dans les deux directions de chacun des N faisceaux monomodes. Le nombre N de faisceaux que l'on peut traiter avec un tel système de recombinaison cohérente selon l'invention peut être d'autant plus grand.

L'invention s'applique en particulier à des sources lasers de puissance à recombinaison cohérente de faisceaux utilisant comme voies $g_j$ de propagation monomode spatiale des milieux à gain, et notamment à des sources lasers de puissance fibrées, c'est à dire que les milieux à gain $g_j$ sont des fibres optiques amplificatrices.

## Revendications

1. Source laser à recombinaison cohérente de faisceaux, comprenant N faisceaux lasers monomodes spatiaux cohérents et N déphaseurs (Dj), un par faisceau, commandés par un dispositif d'asservissement de phase (3), **caractérisée en ce que** ledit dispositif d'asservissement comprend :

   - un dispositif optique (30) comprenant des moyens prélevant une portion au moins de chacun desdits N faisceaux, ledit dispositif optique comprenant un élément optique (32) d'application d'une déformation de phase, et au moins une matrice de détecteurs ($M_1$) pour détecter une première image (im) d'une surface d'onde correspondant auxdits N faisceaux, et une deuxième image ($im_d$) déformée par ledit élément optique (32) ; et
   - des moyens de traitement (31) desdites première et deuxième images, lesdits moyens de traitement comprenant des moyens de mesure des pistons de phase entre les sous-pupilles ($sp_j$) correspondants auxdits N faisceaux, et d'application des corrections de phase ($c(\varphi)$) à chacun des N faisceaux, au moyen desdits N déphaseurs en sorte de minimiser lesdits pistons de phase ; et

   fournissant en sortie un faisceau laser recombiné optimisé.

2. Source laser selon la revendication 1, **caractérisée en ce que** lesdits moyens de traitement (31) sont configurés pour mesurer en outre des basculements de phase entre les sous-pupilles ($sp_j$), et pour appliquer des corrections de phase ($c(\varphi)$) à chacun des N faisceaux, au moyen desdits N déphaseurs en sorte de minimiser lesdits pistons de phase.

3. Source laser selon la revendication 1 ou 2, **caractérisée en ce que** l'élément optique (32) de déformation est un élément de défocalisation d'une distance connue ($\Delta Z$).

4. Source laser selon l'une des revendications précédentes, **caractérisée en ce que** lesdits moyens de traitement applique une fonction de minimisation des pistons de phase par la méthode des moindres carrés.

5. Source laser selon l'une des revendications précédentes, **caractérisée en ce qu'**elle comprend N milieux à gain fournissant en sortie lesdits N faisceaux lasers ($La_j$).

6. Source laser selon la revendication 5, **caractérisée en ce que** lesdits milieux à gain sont des fibres optiques amplificatrices.

**7.** Source laser selon l'une quelconque des revendications précédentes, **caractérisée en ce que** lesdits moyens de traitement sont aptes à imprimer sur le faisceau de sortie ($f_R$) un profil de surface d'onde par approximation par des pistons de phase juxtaposés auxdites corrections de phase.

**8.** Source laser selon la revendication 7, **caractérisée en ce que** ledit profil est une rampe de phase (r).

**9.** Source laser selon la revendication 7, **caractérisée en ce que** ledit profil est une fonction de phase ($\Phi^*$) de pré-correction de perturbation ($\Phi$) connues du faisceau recombiné ($f_R$).

**10.** Source laser selon la revendication 7, comprenant un réseau bidimensionnel (60) de milieux à gain, **caractérisée en ce que** ledit profil est une fonction de phase $f(\varphi)$ définie de façon à focaliser le faisceau recombiné ($f_R$) en une tâche de forme déterminée (61).

**11.** Système optronique à balayage de faisceau comprenant une source laser selon la revendication 8 ou 9.

**12.** Système de télécommunication en espace libre comprenant une source laser selon la revendication 9.

**Claims**

**1.** Laser source with coherent recombination of beams, comprising N coherent spatial monomode laser beams and N phase shifters (Dj), one per beam, controlled by a phase-lock device (3), **characterized in that** said phase-lock device comprises:

- an optical device (30) comprising means taking at least a portion of each of said N beams, said optical device comprising an optical element (32) for applying a phase deformation, and at least one matrix ($M_1$) of detectors for detecting a first image (im) of a wave surface corresponding to said N beams, and a second image ($im_d$) deformed by said optical element (32); and
- processing means (31) for processing said first and second images, said processing means comprising means for measuring the phase pistons between the sub-pupils ($sp_j$) corresponding to said N beams and for applying phase corrections $c(\varphi)$ to each of the N beams, by means of said N phase shifters so as to minimize said phase pistons; and

delivering an optimized recombined laser beam as output.

**2.** Laser source according to Claim 1, **characterized in that** said processing means (31) are configured so as furthermore to measure phase tilts between the sub-pupils ($sp_j$) and to apply phase corrections $c(\varphi)$ to each of the N beams, by means of said N phase shifters so as to minimize said phase pistons.

**3.** Laser source according to Claim 1 or 2, **characterized in that** the optical deforming element (32) is an element for defocusing by a known distance ($\Delta z$).

**4.** Laser source according to one of the preceding claims, **characterized in that** said processing means apply a phase-piston minimization function using the least-squares method.

**5.** Laser source according to one of the preceding claims, **characterized in that** it comprises N gain media delivering said N laser beams ($La_j$) as output.

**6.** Laser source according to Claim 5, **characterized in that** said gain media are optical fiber amplifiers.

**7.** Laser source according to any one of the preceding claims, **characterized in that** said processing means are capable of impressing on the output beam ($f_R$) a wave surface profile approximated by phase pistons juxtaposed with said phase corrections.

**8.** Laser source according to Claim 7, **characterized in that** said profile is a phase ramp (r).

9. Laser source according to Claim 7, **characterized in that** said profile is a phase function ($\Phi^*$) for precorrecting the known perturbations ($\Phi$) of the recombined beam ($f_R$).

10. Laser source according to Claim 7, comprising a two-dimensional array (60) of gain media, **characterized in that** said profile is a phase function $f(\varphi)$ defined so as to focus the recombined beam ($f_R$) into a spot (61) of specified shape.

11. Optronic beam scanning system, comprising a laser source according to Claim 8 or 9.

12. Free-space telecommunication system, comprising a laser source according to Claim 9.

**Patentansprüche**

1. Laserquelle mit kohärenter Strahlenrekombination, die N räumliche kohärente Monomode-Laserstrahlen und N Phasenschieber ($D_j$), einen pro Strahl, aufweist, die von einer Phasenregelungsvorrichtung (3) gesteuert werden, **dadurch gekennzeichnet, dass** die Regelungsvorrichtung aufweist:

    - eine optische Vorrichtung (30), die Mittel aufweist, welche mindestens einen Teil jedes der N Strahlen entnehmen, wobei die optische Vorrichtung ein optisches Element (32) zur Anwendung einer Phasenverformung und mindestens eine Matrix von Detektoren ($M_1$) aufweist, um ein erstes Bild (im) einer den N Strahlen entsprechenden Wellenfront und ein zweites, von dem optischen Element (32) verformtes Bild ($im_d$) zu erfassen; und
    - Mittel (31) zur Verarbeitung des ersten und des zweiten Bilds, wobei die Verarbeitungsmittel Mittel zur Messung der Phasen-Shifts zwischen den den N Strahlen entsprechenden Teilpupillen ($sp_j$) und zur Anwendung der Phasenkorrekturen ($c(\varphi)$) an jeden der N Strahlen mittels der N Phasenschieber aufweisen, um die Phasen-Shifts zu minimieren; und

    am Ausgang einen optimierten rekombinierten Laserstrahl liefern.

2. Laserquelle nach Anspruch 1, **dadurch gekennzeichnet, dass** die Verarbeitungsmittel (31) konfiguriert sind, um außerdem Phasen-Tilts zwischen den Teilpupillen ($sp_j$) zu messen, und um Phasenkorrekturen ($c(\varphi)$) an jedem der N Strahlen mittels der N Phasenschieber derart anzuwenden, dass die Phasen-Shifts minimiert werden.

3. Laserquelle nach Anspruch 1 oder 2, **dadurch gekennzeichnet, dass** das optische Verformungselement (32) ein Defokussierelement mit bekanntem Abstand ($\Delta z$) ist.

4. Laserquelle nach einem der vorhergehenden Ansprüche, **dadurch gekennzeichnet, dass** die Verarbeitungsmittel eine Funktion der Minimierung der Phasen-Shifts durch die Methode der kleinsten Quadrate anwenden.

5. Laserquelle nach einem der vorhergehenden Ansprüche, **dadurch gekennzeichnet, dass** sie N Verstärkungsmedien aufweist, die am Ausgang die N Laserstrahlen ($La_j$) liefern.

6. Laserquelle nach Anspruch 5, **dadurch gekennzeichnet, dass** die Verstärkungsmedien verstärkende Lichtleitfasern sind.

7. Laserquelle nach einem der vorhergehenden Ansprüche, **dadurch gekennzeichnet, dass** die Verarbeitungsmittel fähig sind, dem Ausgangsstrahl ($f_R$) ein Wellenfrontprofil mittels Näherung durch nebeneinander liegende Phasen-Shifts an die Phasenkorrekturen aufzuprägen.

8. Laserquelle nach Anspruch 7, **dadurch gekennzeichnet, dass** das Profil eine Phasenrampe (r) ist.

9. Laserquelle nach Anspruch 7, **dadurch gekennzeichnet, dass** das Profil eine Phasenfunktion ($\Phi^*$) der Vorkorrektur von bekannten Störungen ($\Phi$) des rekombinierten Strahls (fR) ist.

10. Laserquelle nach Anspruch 7, die ein zweidimensionales Gitter (60) von Verstärkungsmedien aufweist, **dadurch gekennzeichnet, dass** das Profil eine Phasenfunktion $f(\varphi)$ ist, die so definiert ist, das sie den rekombinierten Strahl (fR) in einem Fleck bestimmter Form (61) fokussiert.

11. Optronisches System mit Strahlabtastung, das eine Laserquelle nach Anspruch 8 oder 9 aufweist.

**12.** Telekommunikationssystem im freien Raum, das eine Laserquelle nach Anspruch 9 aufweist.

FIG.1

Surface d'onde
à corriger

Objet o

$\varphi$

4

5

i

$\Delta Z$

$i_d$

## FIG.2

31

30

3

$M_1$

32

$M_2$

$\Delta Z$

$C(\varphi)$

$Li_j$

$La_j$

2

$fR$

$D_j$

$g_j$

## FIG.3

# FIG.4a

Transmittance de la pupílle aberrante 41:

FIG.4b

FIG.4c

## FIG.5

## FIG.6

FIG.7

FIG.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004056174 A, Specht